# FASCICULE DE BREVET EUROPEEN

(11) **EP 1 036 259 B1**
(45) Date de publication et mention de la délivrance du brevet: **21.05.2003**
(21) Numéro de dépôt: 98958327.3
(22) Date de dépôt: 04.12.1998
(51) Int. Cl.: F01N 3/28, F01N 3/02

(54) **DISPOSITIF D'ECHAPPEMENT POUR MOTEUR A COMBUSTION INTERNE**
AUSPUFFANLAGE FÜR EINE BRENNKRAFTMASCHINE
EXHAUST DEVICE FOR INTERNAL COMBUSTION ENGINE

(30) Priorité: 05.12.1997 FR 9715376
(43) Date de publication de la demande: 20.09.2000
(73) Titulaire: Renault s.a.s., 92100 Boulogne Billancourt (FR)
(72) Inventeur: FILLION, Thierry, F-78580 Bazemont (FR); GONDOIN, Christophe, F-78390 Bois d'Arcy (FR); ROLLET, Bernard, F-92500 Rueil Malmaison (FR); SERANDOUR, Michel, F-78300 Poissy (FR)
(86) Numéro de dépôt international: FR9802620
(87) Numéro de publication internationale: WO99030012

(56) Documents cités:
- DE-A- 2 345 383
- DE-A- 19 633 563
- DE-U- 9 412 553
- WELTENS H ET AL: "DAS ABGASSYSTEM DES NEUEN PORSCHE 911 CARRERA" MTZ MOTORTECHNISCHE ZEITSCHRIFT, vol. SONDERAUSGABE, no. PORSCHE, 1997, pages 76-80, XP000724255

## Description

La présente invention concerne un dispositif d'échappement des gaz de combustion d'un moteur à combustion interne équipant notamment un véhicule automobile. La présente invention se rapporte plus particulièrement à un dispositif d'échappement comportant un conduit coudé venant se raccorder à un dispositif pour traiter les gaz d'échappement.

L'encombrement des compartiments moteur, compte tenu notamment des contraintes de design, rend les dessins des descentes d'échappement de plus en plus torturés. Il en résulte, qu'il est de plus en plus nécessaire de prévoir des conduits coudés, or de tels conduits coudés lorsqu'ils se situent en amont d'un système de traitement des gaz d'échappement (pot catalytique, filtre à particules, etc.) perturbent l'écoulement de ces derniers et sont donc susceptibles d'entraîner des dysfonctionnements des systèmes de traitement, en particulier en provoquant la concentration des gaz d'échappement dans une partie seulement de ces systèmes de traitement.

Par les publications DE-U-94 12 553.8, DE-A-2345 383 et WO -A-98/07967, on connaît différents conduits coudés d'amenée des gaz d'echappement au système de traitement, munis de moyens déflecteurs, qui présentent les inconvénients précités.

La présente invention a donc pour objet de remédier a ces inconvénients en proposant un élément de conduit d'échappement coudé destiné à être positionné en amont d'un système de traitement des gaz d'échappement qui soit simple à réaliser et qui permet d'assurer un arrosage uniforme de l'entrée du système de traitement.

Le dispositif d'échappement pour moteur à combustion interne, selon l'invention, comprend un système de traitement des gaz d'échappement, tel qu'un pot catalytique ou tel qu'un filtre à particules, du type comportant une enveloppe à l'intérieur de laquelle est logé un corps de traitement traversé par les gaz d'échappement.

Selon l'invention, le dispositif d'échappement comporte en amont du système de traitement des gaz d'échappement, dans le sens de l'écoulement des gaz d'échappement, un conduit coudé d'amenée des gaz d'échappement, ce conduit comprenant des moyens déflecteurs permettant d'assurer une répartition homogène des gaz d'échappement à travers ledit corps de traitement. Le dispositif est caractérisé en ce que le conduit coudé a une forme semi-circulaire et en ce que les moyens déflecteurs consistent en une paroi déflectrice obtenue par déformation de la paroi du conduit de liaison dans la partie extérieure du coude.

Selon une caractéristique du dispositif d'échappement objet de l'invention, le conduit coudé est intégré à l'enveloppe du système de traitement des gaz d'échappement.

Selon une caractéristique du dispositif d'échappement objet de l'invention, ladité paroi est en saillie dans l'écoulement des gaz.

Selon une caractéristique du dispositif d'échappement objet de l'invention, la paroi déflectrice est formée, dans le sens de l'écoulement des gaz, d'une première surface et d'une seconde surface.

Selon une caractéristique du dispositif d'échappement objet de l'invention, la première surface est sensiblement droite et s'étendant sur une longueur variant entre 20 et 50 mm en formant un angle compris entre 15° et 45° avec l'axe longitudinal du corps de traitement, la seconde surface s'étendant dans le prolongement de la première surface jusqu'au voisinage de la face d'entrée du corps de traitement, en formant un angle compris entre 60° et 85° avec l'axe longitudinal dudit corps.

Selon une caractéristique du dispositif d'échappement objet de l'invention, l'arête de jonction entre les deux surfaces s'étend sensiblement au-dessus de l'axe longitudinal du corps de traitement, à une distance comprise entre le 1/8 et les 2/6 de la hauteur de la face d'entrée dudit corps.

Selon une caractéristique du dispositif d'échappement objet de l'invention, le conduit coudé présente dans la partie intérieure du coude située au voisinage du corps de traitement une forme sensiblement droite.

On comprendra mieux les buts, aspects et avantages de la présente invention, d'après la description donnée ci-après d'un mode de réalisation de l'invention, ce mode étant présenté à titre d'exemple non limitatif en se référant aux dessins annexés, dans lesquels :
la figure 1 est une vue schématique en perspective d'un dispositif d'échappement selon l'invention ;
la figure 2 est une vue de détail en coupe partielle de la figure 1 précisant la forme du conduit reliant la turbine au pot catalytique.

Le dispositif d'échappement selon l'invention est adapté pour équiper un moteur à combustion interne de véhicule automobile. Le moteur, qui n'a pas été figuré, destiné à être équipé du dispositif d'échappement selon l'invention est, selon l'exemple choisi, du type à quatre cylindres en ligne.

Seuls les éléments du dispositif d'échappement nécessaires à la compréhension de l'invention ont été représentés. Pour faciliter la lecture, les mêmes éléments portent les mêmes références d'une figure à l'autre.

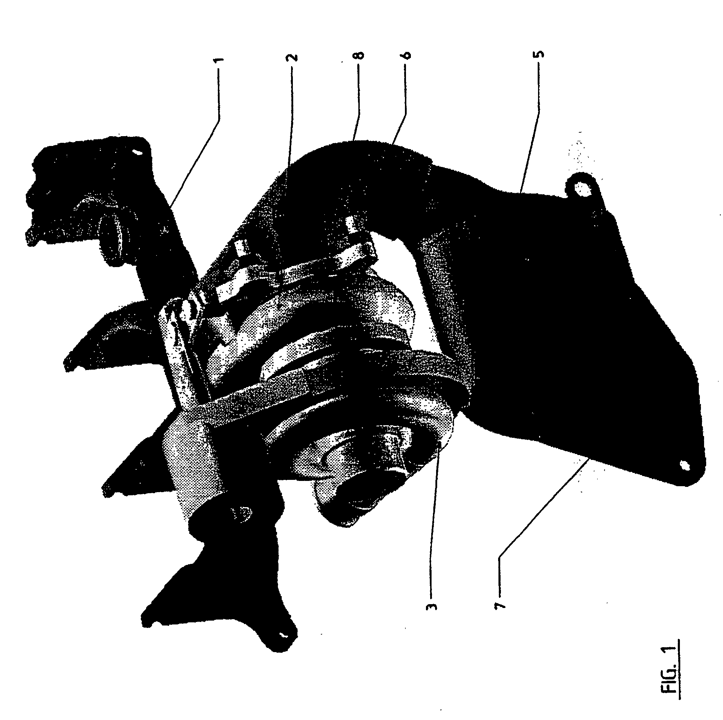

En se reportant à la figure 1, le dispositif d'échappement présente à son extrémité amont, dans le sens de l'écoulement des gaz brûlés, un collecteur d'échappement référencé 1, par exemple "4 en 1", présentant quatre tubulures venant se fixer par leur extrémité amont sur la culasse du moteur à la sortie des conduits d'échappement et débouchant conjointement en aval dans un conduit de liaison commun conduisant les gaz d'échappement à l'entrée de la turbine 2 d'un turbocompresseur 3.

Ce turbocompresseur 3 est classiquement composé de trois parties : une turbine centripète 2 qui capte l'énergie des gaz d'échappement, un carter central qui porte les paliers de l'arbre portant les roues de turbine et de compresseur et un compresseur centrifuge qui suralimente le moteur.

La turbine centripète 2 se compose d'une volute d'entrée en forme de spirale, qui distribue les gaz d'échappement autour d'une roue à ailettes, les gaz d'échappement s'échappant ensuite au centre de la roue. La partie fixe de la turbine 2 est constituée par un carter venant de fonderie où sont ménagés les conduits d'entrée et de sortie des gaz d'échappement ainsi que le logement de la roue de turbine.

Le carter de turbine comprend donc un orifice d'entrée des gaz d'échappement et un orifice de sortie des gaz d'échappement. L'orifice d'entrée des gaz d'échappement est raccordé à la sortie du collecteur d'échappement 1 au moyen d'une bride et s'étend sensiblement radialement à l'axe de rotation de la roue de turbine.

L'orifice de sortie des gaz d'échappement qui s'étend dans l'axe de la roue de turbine, est raccordé à l'entrée d'un système de traitement 5 des gaz d'échappement par l'intermédiaire d'un conduit de liaison 6. Les gaz d'échappement sont ensuite évacués à travers la ligne d'échappement non figurée venant se connecter à la sortie 7 à un système de traitement des gaz d'échappement 5.

Le système de traitement des gaz d'échappement concerné peut-être soit un pot catalytique (catalyseur d'amorçage ou light-off, catalyseur d'oxydation ou de réduction, catalyseur trifonctionnel, etc.), soit un filtre à particules, soit encore tout autre système traversé par les gaz d'échappement (NOxtrap, etc.). Dans la description qui suit, ce système est constitué d'un pot catalytique d'amorçage.

Le pot catalytique 5 est disposé selon l'exemple décrit sensiblement parallèlement et au voisinage immédiat du turbocompresseur 3. Ce montage du pot catalytique 5 sensiblement côte à côte du turbocompresseur 3 assure une meilleure implantation de l'ensemble dans le compartiment moteur d'un véhicule automobile.

Le conduit de liaison 6 entre le turbocompresseur 3 et le pot catalytique 5 est réalisé sous la forme d'un conduit coudé sensiblement en C (inversé), ce conduit étant un conduit distinct ou bien intégré de fonderie au carter de la turbine 2 ou bien encore, comme dans l'exemple figuré, intégré à l'enveloppe du pot catalytique.

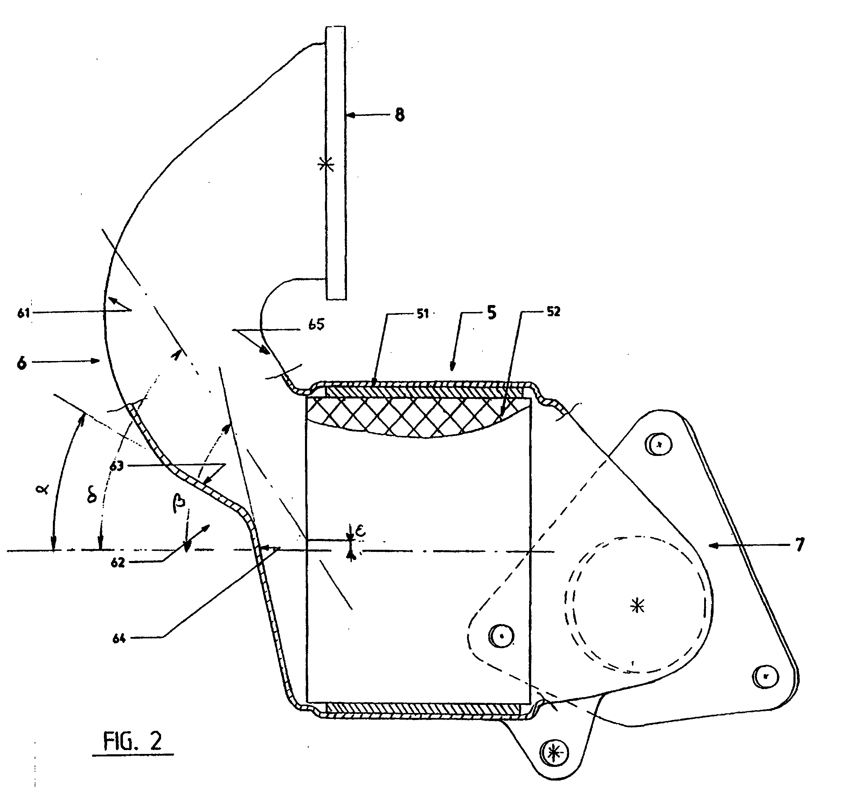

En se reportant sur la figure 2, on voit de façon plus détaillée le pot catalytique 5 qui est formé par une enveloppe oblongue 51 de section circulaire ou elliptique canalisant les gaz d'échappement. Cette enveloppe 51 est raccordée en amont à la turbine 2 et en aval à la ligne d'échappement. L'enveloppe contient dans sa partie centrale un (ou plusieurs) corps de traitement 52 des gaz d'échappement encore connu sous l'appellation monolithe. Le monolithe 52 se compose classiquement d'un bloc cylindrique de section circulaire ou elliptique correspondant sensiblement à celle de l'enveloppe 51.

Le monolithe 52, réalisé par exemple en tôle d'acier inoxydable ou en céramique poreuse, définit une multitude de canaux de passage disposés longitudinalement "en nid d'abeilles" dont les parois sont recouvertes de catalyseur pour permettre le traitement des gaz d'échappement.

L'enveloppe 51 présente, par ailleurs, une extrémité de sortie 7 des gaz d'échappement destinée à être raccordée à la ligne d'échappement et, en amont dans le sens de l'écoulement des gaz d'échappement, une extrémité d'entrée 6 de forme adaptée destinée à se connecter au moyen d'une bride 8, à l'orifice de sortie de la turbine 2.

L'extrémité d'entrée 6 assure donc la liaison entre l'orifice de sortie de la turbine 2 et la face d'entrée du monolithe 52 qui se trouvent sensiblement dans le même plan. Cette extrémité 6 se compose donc d'un conduit en forme de coude semi-circulaire.

Pour éviter que les gaz d'échappement ne se concentrent naturellement par centrifugation sur la partie extérieure du coude 6 puis dans son prolongement à l'entrée du monolithe 52, la paroi-extérieure 61 du coude 6 est conformée, par exemple par emboutissage, pour former une bosse déflectrice 62 en saillie dans l'écoulement des gaz.

La paroi déflectrice 62 ménagée dans la partie extérieure du coude 6, permet de dévier une partie des gaz d'échappement vers la partie intérieure de la face d'entrée du monolithe 52. Grâce à cette paroi, il est possible d'obtenir un arrosage quasi-uniforme de la surface d'entrée du monolithe (coefficient d'arrosage γ>0.9, avec γ définit par la relation γ=1-∫((vi-v)/2Sv)dS où vi est la vitesse des gaz entrant dans la cellule i du monolithe, v la vitesse moyenne dans le plan d'entrée du monolithe et S la surface du monolithe).

La paroi déflectrice 62 est formée dans le sens de l'écoulement des gaz, d'une première surface 63 et d'une seconde surface 64. La première surface 63 qui est sensiblement droite, s'étend sur une longueur variant entre 15 et 50 mm et forme un angle α compris entre 15° et 45° avec l'axe longitudinal du monolithe 52. La seconde surface 64 s'étend dans le prolongement de la première jusqu'au voisinage de la face d'entrée du monolithe 52, en formant un angle β compris entre 60° et 85° avec l'axe longitudinal de ce dernier.

Les surfaces 62 et 63 sont de préférence arrondies à leur périphérie de raccordement au reste du coude 6 (dans les plans perpendiculaires au plan médian précité), pour éviter de former une bosse trop plate et réduire ainsi les écoulements latéraux.

L'arête de jonction entre les deux surfaces 63 et 64, plus ou moins arrondie, s'étend sensiblement orthogonalement au plan médian du coude 6 passant par l'axe du monolithe. L'arête est par ailleurs positionnée au-dessus de l'axe longitudinal du monolithe, à une distance comprise entre le 1/8 et les 2/6 de la hauteur de la face d'entrée du monolithe.

La paroi déflectrice 62 en saillie dans l'écoulement gazeux permet donc malgré le coude d'entrée, d'assurer une répartition remarquablement homogène des gaz d'échappement dans tout le monolithe 52 (on peut obtenir des γ>0.96), ce qui assure une meilleure efficacité du pot catalytique, réduit les pertes de charge du pot catalytique et évite tout vieillissement prématuré et hétérogène du catalyseur dû à une mauvaise répartition des gaz d'échappement dans le monolithe.

Cette paroi déflectrice 62 supprime donc le recours à un divergent d'entrée comme cela est le cas sur les pots catalytiques de l'art antérieur et ce, même avec un coude de liaison 6 très court. Ainsi, grâce à cette disposition, il est possible de positionner le pot catalytique 5 à proximité immédiate de la turbine 2 et donc d'obtenir un ensemble turbocompresseur et pot catalytique extrêmement compact.

Pour améliorer encore l'arrosage des gaz d'échappement à l'entrée du monolithe 52 et réduire les pertes de charge du coude 6, la paroi intérieure 65 du coude est conformée au voisinage du monolithe de façon à être sensiblement droite.

Cette disposition est obtenue en insérant une partie tubulaire rectiligne, cette partie tubulaire rectiligne arrivant directement sur le monolithe 52 côté intérieur et, directement sur la paroi déflectrice 62 côté extérieur. Cette disposition a pour effet de canaliser et redresser l'écoulement arrivant directement sans rayon de courbure sur la partie supérieure du monolithe 52, ce qui évite à cet endroit là, la création d'une zone de recirculations.

De préférence, cette partie tubulaire s'étend sur une distance comprise entre 15 et 40 mm en faisant un angle δ compris entre 45 et 65° avec l'axe du monolithe 52. Par ailleurs, il est également préférable que la fibre neutre de cette partie tubulaire vise un point de la face d'entrée du monolithe 52 situé au-dessus de l'axe longitudinal du monolithe, par exemple d'une valeur s de 3 à 8 mm au-dessus.

Pour améliorer encore la fluidité du coude 6 et réduire encore les pertes de charge de ce dernier, le rayon de courbure intérieur et/ou extérieur du coude 6 sera choisi de préférence constant, le rayon intérieur étant agrandi au maximum.

Bien entendu, l'invention n'est nullement limitée au mode de réalisation décrit et illustré qui n'a été donné qu'à titre d'exemple.

Ainsi, la présente invention s'applique à tous les types de moteurs à combustion interne, qu'ils soient à allumage commandé ou à allumage par compression, qu'ils soient à injection directe ou injection indirecte, qu'ils soient alimentés en carburant liquide ou gazeux, qu'ils soient suralimentés ou non, etc.

Ainsi, La présente invention est applicable quelle que soit la section du monolithe cylindrique, ovale, etc.

Ainsi, il est possible de prévoir des formes adaptées et variées pour réaliser la paroi déflectrice 62 et optimiser la répartition des gaz sur cette dernière.

Ainsi, le pot catalytique 5 n'est pas exclusif d'un type donné et peut également concerner un filtre à particules ou bien encore un pot catalytique dit d'amorçage.

## Revendications

1. Dispositif d'échappement pour moteur à combustion interne, comprenant un système de traitement des gaz d'échappement (5), tel qu'un pot catalytique ou tel qu'un filtre à particules, du type comportant une enveloppe (51) à l'intérieur de laquelle est logé un corps de traitement (52) traversé par les gaz d'échappement, comportant en amont dudit système de traitement des gaz d'échappement (5), dans le sens de l'écoulement des gaz d'échappement, un conduit coudé (6) d'amenée des gaz d'échappement, ledit conduit (6) comprenant des moyens déflecteurs (62) permettant d'assurer une répartition homogène des gaz d'échappement à travers ledit corps de traitement (52), **caractérise en ce que** le conduit coudé (6) a une forme semi-circulaire et **en ce que** les moyens déflecteurs consistent en une paroi déflective (62) obtenue par déformation de la paroi du conduit de liaison (6) dans la partie extérieure du coude.

2. Dispositif d'échappement pour moteur à combustion interne selon la revendication 1, **caractérisé en ce que** ledit conduit coudé (6) est intégré à l'enveloppe (51) dudit système de traitement des gaz d'échappement (5).

3. Dispositif d'échappement pour moteur à combustion interne selon l'une quelconque des revendications 1 à 2, **caractérisé en ce que** ladite paroi déflectrice (62) est en saillie dans l'écoulement des gaz.

4. Dispositif d'échappement pour moteur à combustion interne selon la revendication 2 ou 3, **caractérisé en ce que** ladite paroi déflectrice (62) est formée, dans le sens de l'écoulement des gaz, d'une première surface (63) et d'une seconde surface (64).

5. Dispositif d'échappement pour moteur à combustion interne selon la revendication 4, **caractérisé en ce que** ladite première surface (63) étant sensiblement droite et s'étendant sur une longueur variant entre 20 et 50 mm en formant un angle (α) compris entre 15° et 45° avec l'axe longitudinal du corps de traitement (52), et **en ce que** ladite seconde surface (64) s'étend dans le prolongement de ladite première surface (63) jusqu'au voisinage de la face d'entrée du corps de traitement (52), en formant un angle (β) compris entre 60° et 85° avec l'axe longitudinal dudit corps (52).

6. Dispositif d'échappement pour moteur à combustion interne selon la revendication 5, **caractérisé en ce que** l'arête de jonction entre lesdites surfaces (63,64) s'étend sensiblement au-dessus de l'axe longitudinal du corps de traitement (52) , à une distance comprise entre le 1/8 et les 2/6 de la hauteur de la face d'entrés dudit corps (52).

7. Dispositif d'échappement pour moteur à combustion interne selon l'une quelconque des revendications 1 à 6, **caractérisé en ce que** le conduit coudé (6) présente dans la partie intérieure (65) du coude située au voisinage du corps de traitement (52) une forme sensiblement droite.

## Patentansprüche

1. Abgasanlage für einen Verbrennungsmotor, mit einer Anordnung (5) zur Behandlung der Abgase, zum Beispiel in Form eines mit einem Katalysator versehenen Auspufftopfes oder eines Teilchenfilters, mit einer Hülle (51), in der ein Behandlungsaggregat (52) eingesetzt ist, das von den Abgasen durchsetzt wird, mit einer gekrümmten Leitung (6) zur Zufuhr der Abgase, die stromaufwärts der Anordnung (5) zur Behandlung der Abgase, in Richtung der strömenden Abgase gesehen, angeordnet ist, wobei die Leitung (6) eine Ablenkanordnung (62) aufweist, die eine homogene Verteilung der das Behandlungsaggregat (52) durchsetzenden Abgase gewährleistet, **dadurch gekennzeichnet, dass** die gekrümmte Leitung (6) eine halbkreisförmige Gestalt aufweist und dass die Ablenkanordnung aus einer Ablenkwand (62) besteht, die durch eine Verformung der Wand der Verbindungsleitung (6) im äußeren Abschnitt der Krümmung erhalten wird.

2. Abgasanlage für einen Verbrennungsmotor nach Anspruch 1, **dadurch gekennzeichnet, dass** die gekrümmte Leitung (6) in die Hülle (51) der Anordnung (5) zur Behandlung der Abgase integriert ist.

3. Abgasanlage für einen Verbrennungsmotor nach einem der Ansprüche 1 bis 2, **dadurch gekennzeichnet, dass** die Ablenkwand (62) in die Strömung der Abgase ragt.

4. Abgasanlage für einen Verbrennungsmotor nach Anspruch 2 oder 3, **dadurch gekennzeichnet, dass** die Ablenkwand (62), in Richtung der Strömung der Gase gesehen, eine erste Fläche (63) und eine zweite Fläche (64) aufweist.

5. Abgasanlage für einen Verbrennungsmotor nach Anspruch 4, **dadurch gekennzeichnet, dass** die erste Fläche (63) im wesentlichen gerade ist und sich über eine Länge erstreckt, die zwischen 20 und 50 mm variiert und dabei einen Winkel (α) mit der Längsachse des Behandlungsaggregats (52) einschließt, der zwischen 15° und 45° liegt und dass die zweite Fläche (64) sich in Verlängerung der ersten Fläche (63) erstreckt bis in die Nähe der Eintrittsfläche des Behandlungsaggregats (52) und dabei einen Winkel (β) mit der Längsachse des Aggregats (52) einschließt, der zwischen 60° und 85° liegt.

6. Abgasanlage für einen Verbrennungsmotor nach Anspruch 5, **dadurch gekennzeichnet, dass** sich die Verbindungskante zwischen den beiden Flächen (63, 64) im wesentlichen oberhalb der Längsachse des Behandlungsaggregats (52) erstreckt in einem Abstand zwischen 1/8 und 2/6 der Höhe der Eintrittsfläche des Behandlungsaggregats (52).

7. Abgasanlage für einen Verbrennungsmotor nach einem der Ansprüche 1 bis 6, **dadurch gekennzeichnet, dass** die gekrümmte Leitung (6)im unteren Bereich (65) der Krümmung und in der Nähe des Behandlungsaggregats (52) eine im wesentlichen gerade Form aufweist.

## Claims

1. An exhaust device for an internal combustion engine comprising a system (5) for treating the exhaust gases such as a catalytic converter or a particulate filter, of the type comprising a housing (51), in the interior of which is accommodated a treatment body (52) through which the exhaust gases pass, comprising upstream of said exhaust gas treatment system (5) in the direction of flow of the exhaust gases a bent conduit (6) for delivery of the exhaust gases, said conduit (6) comprising deflector means (62) making it possible to ensure homogeneous distribution of the exhaust gases through said treatment body (52), **characterised in that** said bent conduit (6) is of a semicircular shape and that the deflector means consist of a deflector wall (62) produced by deformation of the wall of the connecting conduit (6) in the outward part of the bend.

2. An exhaust device for an internal combustion engine according to claim 1 **characterised in that** said bent conduit (6) is integrated in the housing (51) of said exhaust gas treatment system (5).

3. An exhaust device for an internal combustion engine according to either one of claims 1 and 2 **characterised in that** said deflector wall (62) is in projecting relationship into the flow of the gases.

4. An exhaust device for an internal combustion engine according to claim 1, claim 2 or claim 3 **characterised in that** said deflector wall (62) is formed, in the direction of flow of the gases, by a first surface (63) and a second surface (64).

5. An exhaust device for an internal combustion engine according to claim 4 **characterised in that** said first surface (63) being substantially straight and extending over a length varying between 20 and 50 mm, forming an angle (α) of between 15° and 45° with the longitudinal axis of the treatment body (52) and that said second surface (64) extends as a prolongation of said first surface (63) to the vicinity of the intake face of the treatment body (52), forming an angle (β) of between 60° and 85° with the longitudinal axis of said body (52).

6. An exhaust device for an internal combustion engine according to claim 5 **characterised in that** the junction edge between said surfaces (63, 64) extends substantially above the longitudinal axis of the treatment body (52) at a distance of between one eighth and two sixths of the height of the intake face of said body (52).

7. An exhaust device for an internal combustion engine according to any one of claims 1 to 6 **characterised in that** the bent conduit (6) is of a substantially straight shape in the inward part (65) of the bend, which part is disposed in the vicinity of the treatment body (52).
